Europäisches Patentamt

European Patent Office

Office européen des brevets

(11) Veröffentlichungsnummer: **0 552 467 A1**

## EUROPÄISCHE PATENTANMELDUNG

(21) Anmeldenummer: **92121290.8**

(22) Anmeldetag: **15.12.92**

(51) Int. Cl.5: **C04B** **33/13**, C04B 38/00

(30) Priorität: **18.01.92 DE 4201212**

(43) Veröffentlichungstag der Anmeldung:
**28.07.93 Patentblatt  93/30**

(84) Benannte Vertragsstaaten:
**AT BE DK ES FR GB IT LU NL**

(71) Anmelder: **H.J. SCHMIDT
INDUSTRIE-MINERALE GmbH
Willi-Brückner-Strasse 1
W-5450 Neuwied 1(DE)**

(72) Erfinder: **Klaus Werner, Schmidt
Willi-Brückner-Strasse 18
W- 54501 Neuwied 1(DE)**

(74) Vertreter: **Grommes, Karl F., Dr.
Mehlstrasse 14-16
W-5400 Koblenz (DE)**

(54) **Masse zur Herstellung von Leichtschamotte.**

(57) Die **Masse zur Herstellung von Leichtschamotte** kommt ohne sonst übliche Ausbrenn- oder Blähstoffe aus. Sie ist ein Gemisch aus etwa 50 bis 85 Gew.% gemahlener Ton samt den Ton modifizierender Ergänzungsstoffe und etwa 15 bis 50 Gew.% Zuschlagstoff, wobei der Zuschlagstoff einen Gehalt von mindestens 30 Gew.% $Al_2O_3$ bei einem Schüttgewicht von 300 bis 500 g/l aufweist. Bei einem Gehalt von höchstens 1 Gew.% $Fe_2O_3$ im Zuschlagstoff entsteht eine hellweiße Leichtschamotte. Als billige Zuschlagstoffe können insbesondere ausgewählte Flugaschen Verwendung finden.

EP 0 552 467 A1

Rank Xerox (UK) Business Services
(3.10/3.6/3.3.1)

## Technisches Gebiet

Die Erfindung betrifft eine Masse zur Herstellung von Leichtschamotte mit einem Anteil an gemahlenem Ton und ggfs. den Ton modifizierenden Ergänzungsstoffen.

Schamotte stellt einen wichtigen Werkstoff für verschiedene Industriezweige dar, namentlich die Keramik-, Feuerfest- und Gießerei-Industrie. Sie läßt sich bekanntlich durch Brennen von Ton gewinnen. Je nach Ausgangsmaterial erreicht die (stückige) Schamotte im Normalfall ein Raumgewicht (eine Rohdichte) zwischen 1500 und 2000 g/l. Daraus und dem spateren Zerkleinerungsgrad oder der Körnung ergibt sich dann die für die Praxis bedeutsamere Kenngröße, das sogenannte Schüttgewicht. Letzteres ist naturgemäß niedriger als das Raumgewicht.

Für bestimmte Anwendungsfälle, insbesondere in der Feuerfest-Industrie, befriedigen die Materialeigenschaften normaler Schamotte bisweilen nicht mehr. So stellt sich dort die Forderung nach einer Leichtschamotte, um diese beispielsweise zu speziellen Isoliersteinen oder zu speziellem Isolierbeton weiterverarbeiten zu können. Unter Leichtschamotte soll hier eine Schamotte mit einem Raumgewicht unterhalb von 1500 g/l und insbesondere in einem Bereich zwischen 900 und 1500 g/l verstanden werden.

## Stand der Technik

Es ist bereits bekannt, Leichtschamotte mit Hilfe spezieller Tone zu gewinnen. Dabei handelt es sich insbesondere um kohlehaltige Tone. Während der Umwandlung von Ton in Schamotte brennen die Kohlepartikel aus und hinterlassen ein leichteres Endprodukt. Allerdings treten dabei auch in stärkeren Maße unerwünschte Verfärbungen auf und ergeben sich zwangsläufig Emissionsprobleme.

Ferner ist es bekannt, normalen Tonen nachträglich vergleichbare Ausbrennstoffe zuzusetzen, wie Holzmehl, Sägemehl, Brikettabrieb u.ä. Aber auch Kunststoffe und Chemikalien (z.B. Styropor, Phenolphthalein) sind bereits als Ausbrennstoffe, Blähmittel oder dgl. in Betracht gezogen worden. Sie erweisen sich ebenfalls als nur bedingt geeignet und lassen kaum höhere $Al_2O_3$-Gehalte in der fertigen Leichtschamotte zu. Nun gilt aber eine Leichtschamotte um so höherwertig, je höher ihr $Al_2O_3$-Gehalt ist, da dieser maßgeblich für die Feuerbeständigkeit ist.

## Darstellung der Erfindung

Hier setzt nun die Erfindung an. Sie will eine neue Masse zur Herstellung von Leichtschamotte vorschlagen, mit der sich die vorgenannten Nachteile vermeiden lassen.

Gelöst wird diese Aufgabe erfindungsgemäß dadurch, daß der Ton und die Ergänzungsstoffe in einem Gemisch mit einem Zuschlagstoff vorliegen, wobei der Anteil an Ton und Ergänzungsstoffen etwa 50 bis 85 Gew.% und der Anteil an Zuschlagstoff etwa 15 bis 50 Gew.% beträgt und wobei der Zuschlagstoff einen Gehalt von mindestens 30 Gew.% $Al_2O_3$ bei einem Schüttgewicht von 300 bis 500 g/l aufweist.

Wie ersichtlich, soll das vorgeschlagene Gemisch zunächst Ton und Ergänzungsstoffe sowie zu einem hohen Anteil (bis maximal zum selben Anteil wie Ton und Ergänzungsstoffe) einen speziellen, durch seine chemische Zusammensetzung wie auch durch seine physikalische Struktur, d.h. sein Schüttgewicht näher definierten Zuschlagstoff enthalten.

"Ton" soll hier im weitesten Sinne verstanden werden. Damit gemeint ist zunächst gewöhnlicher abbauwürdiger Ton, wie er an zahlreichen Lagerstätten mit $Al_2O_3$-Gehalten bis 40 Gew.% anzutreffen ist. Insbesondere ist damit aber auch Kaolin oder kaolinitischer Ton gemeint, welcher den zusätzlichen Vorteil besonderer Reinheit besitzt und eine helle Schamotte ergibt.

Außer dem eigentlichen Ton kann und soll die erfindungsgemäße Masse auch noch den Ton modifizierende Ergänzungsstoffe enthalten, das sind in erster Linie $Al_2O_3$-Träger zur Erhöhung der Feuerbeständigkeit, wie gebrannter oder ungebrannter Kyanit, Andalusit, Mullit, Aluminiumhydroxid, Bauxit und kalzinierte Tonerden. Speziell für ungebrannnten Kyanit gilt, daß er einerseits mit $Al_2O_3$-Gehalten von etwa 60 Gew.% der Erhöhung der Feuerbeständigkeit dient und andererseits dank seiner Neigung zur Volumenvergrößerung die mit dem Brennen von Ton einhergehende Schwindung zu kompensieren vermag. Zur Verbesserung anderer Eigenschaften kommen außerdem zirkonhaltige, chromhaltige und/oder magnesiumhaltige Komponenten, einschließlich Spinelle, als Ergänzungsstoffe in Betracht.

Sowohl der Ton als auch die Ergänzungsstoffe sollen gemahlen sein. Sie lassen sich in dieser Form gut mischen und ausreichend homogenisieren. Der Zuschlagstoff soll das mitgeteilte Schüttgewicht besitzen; außerdem bleibt darauf zu achten, daß er einen gewissen $Al_2O_3$-Gehalt nicht unterschreitet. Erzielt wird danach eine überraschend leichte Schamotte. Ein solches Ergebnis wurde dagegen nach dem bisherigen Stand der Technik nicht erreicht.

Wie ersichtlich, hat die Erfindung einen neuen Weg eingeschlagen, indem sie von Ausbrennstoffen oder Verunreinigungen im Ton absieht, welche ja darin auch nicht verbleiben sollen, sondern wieder ausgetrieben werden müssen, um so größere Strukturveränderungen (Porosität) in der Schamotte herbeizuführen. - Es ist das Verdienst der Erfindung, erkannt zu haben, daß solche Strukturveränderungen wesentlich einfacher und ohne störende Nebeneffekte herbeigeführt werden können, wenn Ton mit einer ausreichenden Menge eines von vornherein anders strukturierten jedoch ähnlich beständigen Zuschlagstoffes gemischt und dieses Gemisch der Schamotteherstellung zugeführt wird. Die Schamotteherstellung selbst ist dann unkritisch und kann wie bisher, das heißt wie im Falle von normaler Schamotte erfolgen.

Um dies zu veranschaulichen, seien nachstehend die einzelnen Maßnahmen von Anfang an beispielhaft genannt. Zunächst wird Ton aufbereitet (getrocknet und gemahlen), gegebenenfalls mit Ergänzungsstoffen (nach entsprechender Vorbehandlung) versetzt und mit dem angegebenen Zuschlagstoff gemischt. Damit steht bereits die erfindungsgemäße Masse für die gewünschte Schamotteherstellung grundsätzlich zur Verfügung.

Das Gemisch kann anschließend unter Verwendung einer Anmachflüssigkeit (im einfachsten Falle Wasser, ggfs. mit üblichen Zusätzen, wie Wasserglas, Kieselsol, Monoaluminiumphosphat, Phosphorsäure und/oder deren Salze) angefeuchtet, stranggezogen und verbatzt werden. Die Batzen lassen sich mittels einer Setzmaschine auf Transportwagen aufsetzen, welche zunächst einen Tunneltrockner passieren und danach in einen Tunnelofen gelangen. Dort verweilen die Batzen beispeilsweise für ca. 3 Tage bei Temperaturen zwischen 1250 und 1450 °C, wobei die Leichtschamotte entsteht. Diese kann den Wagen nach Verlassen des Ofens entnommen werden.

Die Leichtschamotte gelangt entweder stückig (als sogenannte Stückschamotte) oder vermahlen (als sogenannte Mahlschamotte) in unterschiedlichen Körnungen, einschließlich Feinmehlen, zum Verkauf. Es lassen sich beispielsweise Mahlschamotte mit Tonmehl später zu Schamottesteinen (Feuer-Leichtsteinen) weiterverarbeiten.

Wie bereits erwähnt, kommt dem Zuschlagstoff Bedeutung in mehrfacher Hinsicht zu, weshalb sowohl sein Schüttgewicht als auch seine chemische Zusammensetzung und insbesondere sein $Al_2O_3$-Gehalt beachtlich sind. - Wenn gemäß einem weiteren Vorschlag der Zuschlagstoff einen Gehalt von höchstens 1 Gew.% $Fe_2O_3$ aufweist, so läßt sich damit im übrigen eine besonders helle oder sogar hellweiße Leichtschamotte erzielen.

Ferner wurde gefunden, daß sich auch Flugaschen, das sind Abfallprodukte von Kohlekraftwerken, in hervorragender Weise als Zuschlagstoffe eignen. Diese Erkenntnis mag den Durchschnittsfachmann schon deshalb überraschen, weil Flugaschen im allgemeinen als stark von Verunreinigungen belastet gelten. Nicht nur, daß hier Gehalte bis zu 10 Gew.% an $Fe_2O_3$ bekannt sind, es finden sich auch ebenso hohe Gehalte an $Na_2O$ und/oder $K_2O$. Letztere Verbindungen wirken als Flußmittel, welche den Schmelzpunkt der Schamotte herabsetzen und deshalb gefürchtet sind.

Dagegen konnte festgestellt werden, daß auch Flugaschen ganz anderer Zusammensetzung existieren. Diese besitzen nicht nur die gewünschte Struktur bzw. das geeignete Schüttgewicht, sondern entsprechen auch in ihren chemischen Zusammensetzungen den als wirksam erkannten Werten. So lassen sich nicht nur Flugaschen mit vernachlässigbar geringem Gehalt an $Na_2O$ und/oder $K_2O$ finden, sondern auch solche mit ebenso niedrigem Gehalt an $Fe_2O_3$.

Ausführungsbeispiele

Nachstehend werden drei Beispiele für eine erfindungsgemäße Masse und der daraus gewinnbaren Leichtschamotte mitgeteilt. Die erfingungsgemäßen Massen sind durch ihre Anteile an Zuschlagstoff sowie Ton und entsprechender Ergänzungsstoffe charakterisiert (vgl. Tabelle 1), die zugehörigen Leichtschamotten durch ihre Schüttgewichte bei verschiedenen Körnungen (vgl. Tabelle 2) wie auch teilweise durch ihre chemische Zusammensetzungen (vgl. Tabelle 3). Zum Einsatz kamen als Zuschlagstoff eine bestimmte Flugasche mit einem Gehalt an $Al_2O_3$ von etwa 40 Gew.% und Gehalten an $Fe_2O_3$ sowie $Na_2O$ und/oder $K_2O$ von jeweils weniger als 1 Gew.% bei einem Schüttgewicht von etwa 400 g/l; als Ton samt Ergänzungsstoffen wurde Material ohne nennenswerte Verunreinigung mit Gehalten an $Al_2O_3$ nahe den bekannten Obergrenzen gewählt. Erzielt werden konnte in allen drei Fällen eine hochwertige Leichtschamotte von hellweißer Farbe.

## Tabelle 1

| Gemisch / Beispiel | Anteile (Gew. %) | | | | |
|---|---|---|---|---|---|
| | Ton | Kaolin | Kyanit | Tonerde | Flugasche |
| I | 35 | 20 | 15 | 6 | 24 |
| II | 25 | 20 | 10 | 20 | 25 |
| III | 20 | 20 | -- | 36 | 24 |

## Tabelle 2

| Leicht-Schamotte / Beispiel | Schüttgewicht (g/l) bei versch. Körnung | | |
|---|---|---|---|
| | 3 - 6 mm | 1 - 3 mm | 0 - 1 mm |
| I | 700 | 700 | 900 |
| II | 700 | 700 | 900 |
| III | 700 | 700 | 900 |

## Tabelle 3

| Leicht-Schamotte / Beispiel | teilw. chem. Zusammensetzung (Gew. %) | | | |
|---|---|---|---|---|
| | $Al_2O_3$ | $Fe_2O_3$ | $Na_2O$ | $K_2O$ |
| I | 47 | 0,8 | 0,1 | 0,6 |
| II | 53 | 0,8 | 0,1 | 0,5 |
| III | 60 | 0,8 | 0,1 | 0,5 |

**Patentansprüche**

1. Masse zur Herstellung von Leichtschamotte mit einem Anteil an gemahlenem Ton und ggfs. den Ton modifizierenden Ergänzungsstoffen, dadurch gekennzeichnet, daß der Ton und die Ergänzungsstoffe in einem Gemisch mit einem Zuschlagstoff vorliegen, wobei der Anteil an Ton und Ergänzungsstoffen etwa 50 bis 85 Gew.% und der Anteil an Zuschlagstoff etwa 15 bis 50 Gew.% beträgt und wobei der Zuschlagstoff einen Gehalt von mindestens 30 Gew.% $Al_2O_3$ bei einem Schüttgewicht von 300 bis 500 g/l aufweist.

2. Masse nach Anspruch 1, dadurch gekennzeichnet, daß der Zuschlagstoff einen Gehalt von höchstens 1 Gew.% $Fe_2O_3$ aufweist.

3. Masse nach Anspruch 1 oder 2, dadurch gekennzeichnet, daß der Zuschlagstoff eine industrielle Flugasche ist, welche einen Gehalt von höchstens 1 Gew.% $Na_2O$ und/oder $K_2O$ aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 061 241 (CENTRAL ELECTRICITY GENERATING BOARD) <br> * Seite 5, Zeile 36 - Zeile 45; Ansprüche 1,2; Tabelle 1 * <br> --- | 1 | C04B33/13 <br> C04B38/00 |
| A | GB-A-2 218 412 (P.L. OWENS) <br> * Ansprüche 1-6 * <br> --- | 1-3 | |
| A | DE-A-3 908 172 (A. GUMBMANN) <br> * Ansprüche 1-12 * <br> --- | 1-3 | |
| A | US-A-3 600 476 (T. SUZUKI ET AL.) <br> * das ganze Dokument * <br> --- | 1-3 | |
| A | DE-A-2 213 231 (F.W.A. KURZ) <br> * Ansprüche 1-6 * <br> --- | 1-3 | |
| A | DE-A-1 067 357 (STEINKOHLEN-ELEKTRIZITÄT AG) <br> * das ganze Dokument * | 1-3 | |
| | ----- | | **RECHERCHIERTE SACHGEBIETE (Int. Cl.5 )** <br><br> C04B |

Der vorliegende Recherchenbericht wurde für alle Patentansprüche erstellt

| Recherchenort | Abschlußdatum der Recherche | Prüfer |
|---|---|---|
| DEN HAAG | 13 APRIL 1993 | LUETHE H. |